(19) Europäisches Patentamt
European Patent Office
Office européen des brevets

(11) Publication number: **0 045 835**
**B1**

(12) # EUROPEAN PATENT SPECIFICATION

(45) Date of publication of patent specification: **14.03.90**

(51) Int. Cl.[5]: **C 08 K 5/52**, C 08 K 3/32, C 08 L 101/00

(21) Application number: **81104175.5**

(22) Date of filing: **01.06.81**

(54) **Self-extinguishing polymeric compositions.**

(30) Priority: **02.06.80 CH 4250/80**
**14.01.81 CH 200/81**

(43) Date of publication of application:
**17.02.82 Bulletin 82/07**

(45) Publication of the grant of the patent:
**14.03.90 Bulletin 90/11**

(84) Designated Contracting States:
**AT BE DE FR GB IT NL SE**

(56) References cited:
**EP-A-0 025 082**
**DE-A-2 723 877**
**DE-A-2 800 891**
**FR-A-1 299 543**
**FR-A-2 307 813**
**US-A-4 003 862**
**US-A-4 195 139**

(73) Proprietor: **Eigenmann, Ludwig, Dr.**
**P.O. Box 8**
**CH-6833 Vacallo (CH)**

(72) Inventor: **Eigenmann, Ludwig, Dr.**
**P.O. Box 8**
**CH-6833 Vacallo (CH)**

(74) Representative: **Haibach, Tino, Dr. et al**
**Patentanwälte Dipl.-Ing. C. Wallach; Dipl.-Ing. G. Koch Dr. T. Haibach; Dipl.-Ing. R. Feldkamp P.O. Box 920**
**D-8000 Munich 33 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 045 835 B1**

**Description**

The invention relates to self-extinguishing, flame retardant polymeric compositions which upon contact with a flame provide an intumescent charforming crust, are non-dripping and promote neither flames nor toxic fumes, which contain per 100 parts by weight of a thermoplastic polymer, at least 5 parts by weight of a reaction product (component A) between an acid of phosphorus and a hydroxy-alkylated urea derivative said reaction product having chemical structure units of the type

$$-\!\!\![N-(CH_2)_n-O-P]\!\!\!-$$

wherein n has a value between, and including 1 and 6.

Several compositions rendering fireproof or uninflammable polymers are already known in the art, f.i. compositions based upon metallic compounds, in particular antimony compounds, in combination with thermally instable halogenated compounds, such as chlorinated paraffin waxes and/or brominated organic compounds. Further examples of flame-retardant and flame barrier agents are phosphorus containing compounds for example as disclosed in US—A—4 010 137.

The known combinations "metallic compound + halogenated compound" yield satisfying results as far as the flame-retardant properties conferred thereby to polymers are concerned, but they are subject to serious drawbacks: corrosive phenomena in the machines and installations in which the treatment of the materials is performed, and intense emission of toxic fumes and gases when a fire occurs. Further, acceptable flame retardancy levels are only obtained by making use of high concentrations of such combinations.

From US—A—4 003 862 and FR—A—1 229 543 as well as from EP—A—25 082 (published after the priority date of this patent application) it is already known to prepare flame-retardant polymeric compositions by adding compounds having a chemical structural unit of the formula

$$-\!\!\![N-(R)_n-O-P]\!\!\!-$$

to thermoplastic polymers.

FR—A—2 230 813 discloses flame-retardant compounds having a phosphonate structure.

From US—A—4 195 139 it is already known to use hydroxyalkyl derivatives of melamine as flame-retardant additives which render polymeric compositions fire-proof.

In DE—A—2 723 877 and DE—A—2 800 891 there is described that it is common practice to use ammonium polyphosphates as flame-retardants in combination with other flame-retardants to render polymer compositions fire-proof.

It has now been surprisingly found that it is possible to prepare polymeric compositions having an excellent flame-retardancy by the addition of a particular organic compound.

Subject-matter of the present invention are flame-retardant polymeric compositions which upon contact with a flame provide an intumescent charforming crust, are non-dripping and promote neither flames nor toxic fumes, containing per 100 parts by weight of a thermoplastic polymer, at least 5 parts by weight of a reaction product (component A) between an acid of phosphorus and a hydroxyalkylated urea derivative said reaction product having chemical structure units of the type

$$-\!\!\![N-(CH_2)_n-O-P]\!\!\!-$$

wherein n has a value between, and including, 1 and 6, which are characterized in that as hydroxy-alkylated urea derivative a hydroxyalkyl derivative of isocyanuric acid having the formula

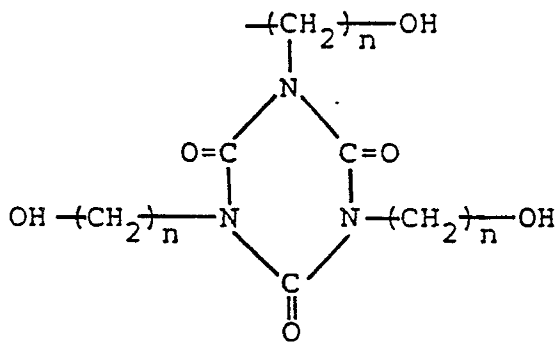

wherein n has a value between, and including, 1 and 6 is used and that they contain component A in an amount of from 5 to 40 parts by weight.

According to a preferred embodiment of the present invention the flame-retardant polymeric compositions contain per 100 parts by weight of a thermoplastic polymer additional to component A from 5 to 30 parts by weight of a polymer of an ammonium polyphosphate (component B) as well as optionally an amine phosphate in an amount of 1 to 10 parts by weight per 100 parts by weight of thermoplastic polymer.

A particularly preferred hydroxyalkyl derivative of the isocyanuric acid which can be used according to the present invention is tris-(2-hydroxyethyl)-isocyanaurate.

The acid of phosphorus which can be used according to the present invention preferably is phosphorous acid ($H_3PO_3$) or phosphoric acid ($H_3PO_4$).

According to a further preferred embodiment of the present invention the molar ratio between the acid of phosphorus and the hydroxyalkyl derivative of isocyanuric acid is comprised between 4:1 and 0,1:4.

The ammonium polyphosphate used according to the present invention as component B preferably has the formula $(NH_4PO_3)_{n'}$, wherein n' is greater than 20.

The amine phosphate used according to the present invention in addition to components (A) and (B) is the orthophosphate of melamine or the pyrophosphate of melamine.

The thermoplastic polymer contained in the flame-retardant polymeric composition is preferably selected from the group consisting of polymers or copolymers of olefins, polyesters, polyvinyl derivatives, polyamides, polycarbonates and mixtures of these polymers with elastomers.

In the following of the present disclosure, the above defined reaction product is indicated as component A, while the ammonium polyphosphate is indicated as component B.

The acid of phosphorus can be phosphorous acid of formula $H_3PO_3$ or phosphoric acid ($H_3PO_4$), the properties and compositions of which may vary according to its $H_3PO_4$ content, which can vary between 50 and 120% by weight, preferably between 80 and 115% by weight.

The isocyanuric acid hydroxyalkyl derivative is preferably the tris-(2-hydroxyethyl)isocyanurate having a nitrogen content from 15 to 17% by weight and a melting point between 132 and 138°C. The reaction product between the acid of phosphorus and the hydroxyalkyl derivative(s) of the isocyanuric acid is preferably obtained by introducing the reagents into a reactor provided with a stirrer, of the two-walled type heated by circulating warm oil, and provided with a degassing vacuum system. The temperature may vary from 140°C to 260°C during the entire reaction time, which in turn may vary between 2 and 7 hours.

The molar ratio between the acid of the phosphorus and the hydroxyalkyl derivative(s) of the isocyanuric acid is comprised between 4:1 and 0,1:4.

It is also possible to use synthesis methods such as the esterification of the hydroxyalkyl derivatives with phosphorus halides or by means of transesterification reactions between phosphoric esters and hydroxyalkyl derivatives of the isocyanuric acid.

The reaction products forming said component A) and the ammonium polyphosphate forming said component B), and also, in the described modified embodiment, the amine phosphate can be added to any type of thermoplastic polymer, particularly polymers and copolymers (either statistical or block polymers) e.g. of olefines, of polyolefines, of vinyl monomers, of esters and of amides, and mixtures of said polymers with elastomers; the same substances and compounds can also be utilized for the production of varnishes, coatings and fibers.

The respective flame retardant compositions are prepared by utilizing known techniques, that is by mixing the polymer to be rendered flame retardant, the reaction product of type A) and also, in the second embodiment, the ammonium polyphosphate and, in the modified embodiment, the amine phosphate in a Banbury type mixer, or two-screw extruder, operating at the plasticization temperature of the polymer. The batch or mixture thus obtained is then compression molded at the most suitable temperature for providing the desired articles of manufacture.

The flame retarding properties of the polymeric compositions of the present invention are determined by compressing the granular product into sheets having a thickness of 3 mm, by means of a small press and operating for 7 minutes with a pressure of 4 MPa at a suitable temperature which may vary from polymer to polymer. On the thus prepared sheets the flame retarding level is determined either by measuring (according to the ASTM D-2863 specification) the "oxygen index", which indicates the minimal percentage of $O_2$ in a mixture $O_2/N_2$, which is required for the sample to burn continuously, or also by making use of the UL-94 ("Underwriters Laboratories" — U.S.A.) specifications, which provide for an evaluation of the flame retarding property rating of the elastic materials, and rely on more or less severe testing conditions, whereby to classify the sample within a range or echelon of different flame retarding levels.

In the tests indicated hereinbelow in table I use has been made of the "Vertical Burning Test" permitting to classify the material at decreasing levels V-0, V-1 and V-2.

Each test is made on a group of 5 samples having a thickness of 3,2 mm, which are sustained in vertical position, and which are primed by flame at their lower end; two ignition attempts, each of 10 seconds, are made.

The three flame retarding levels V-0, V-1 and V-2 are defined as follows:

V-0 = No sample burns for more than 10 seconds, after each application of a flame, nor do they show any dripping of ignited particles.
Further, the total combustion time is no longer than 10 seconds for any attempt effected on the group of 5 samples.

V-1 = At this level, combustion times up to 30 seconds are admitted for each individual test and up to 250 seconds for 10 attempts made on the group of 5 samples. At this level, too, no sample shows any dripping of ignited particles.

V-2 = At this level, the admitted combustion times are the same as for level V-1, but the dripping of ignited particles is admitted.

The several aspects of the invention are illustrated by the following examples.

Examples 1 to 6 relate to the use of component A only, while Examples 7 to 12 relate to the use of component B associated to component A.

Example 1

In a 2 500 ml reactor, 70 g of phosphoric acid ($H_3PO_4$ = 85%) are reacted with 250 g of tris(2-hydroxyethyl)isocyanaurate, under stirring at a temperature of 150°C for 1,5 hours. Thereafter a vacuum of 40 kPa is applied and the temperature is raised to 250°C for a period of 4 hours.

During this latter period the reaction $H_2O$ is removed and substantial cross-linking is created in the compound between the various molecules of the phosphoric ester which has been formed in the first stage of the reaction. The product is then discharged from the cooled reactor and milled into a powder of granules having a diameter of less than 80 µm.

Example 2 (Comparative Example)

800 g of phosphoric acid ($H_3PO_4$ = 85%) are reacted with 200 g of tris(2-hydroxymethyl)isocyanurate and 100 grams of trismethylol derivative of melamine. The reaction is conducted in accordance with example 1 and from the reactor a product is discharged which upon cooling and milling in powder form has properties substantially equivalent to that of the product of example 1.

Example 3 (Comparative Example)

350 g of phosphoric acid ($H_3PO_4$ = 100%) are reacted with 200 g of tris(2-hydroxyethyl)isocyanurate and with 300 g of N,N'dimethylolethylene urea. The reaction proceeds as described in example 1, and the respective product also is comparable with those of examples 1 and 2.

Example 4 (Comparative Example)

600 g of phosphoric acid ($H_3PO_4$ = 115%) are reacted with 150 g of trishydroxyethyl isocyanaurate, 150 g of trimethylol derivative of melamine and 50 g of N,N'dimethylol urea. The reaction is made to proceed in accordance with example 1 and a product is obtained having characteristics similar to those of the products of the preceeding examples.

Example 5 (Comparative Example)

Proceeding in the same way and under the same conditions as in example 1, 620 g of phosphoric acid ($H_3PO_4$ = 90%) are reacted with 280 g of N,N'-dimethylol urea and with 280 g of hexamethylol melamine: a product is discharged which is firstly cooled and then ground into a powder formed of granules of diameter less than 70 µm.

Example 6 (Comparative Example)

Proceeding in the same way and under same conditions as in example 1, 800 g of phosphoric acid ($H_3PO_4$ = 85%) are reacted with 300 g of trimethylol derivative of melamine. A product having characteristics comparable to those of example 2 is obtained.

The powders obtained in the preceeding examples are mixed with thermoplastic polymers in a Banbury type mixer at the most suitable temperature for obtaining a granular product.

The results, indicated in the following table are of basic value and importance for different thermoplastic polymers.

TABLE I

| | Parts by weight | | | | |
|---|---|---|---|---|---|
| Additive example 1 | 20 | | | | |
| Additive example 2 | | 25 | | | |
| Additive example 3 | | | 30 | | |
| Additive example 4 | | | | 20 | |
| Additive example 5 | | | | | 28 |
| Thermoplastic polymer | 80 | 75 | 70 | 80 | 72 |
| Oxygen Index | 28,5 | 28 | 30 | 26,5 | 28 |
| UL 94 (3,2 mm) test | V-0 | V-0 | V-0 | V-0 | V-0 |

Example 7

50 g of phosphoric acid ($H_3PO_4$ = 85%) are reacted with 250 g of tris(2-hydroxyethyl)isocyanurate, in a 2 500 ml reactor, under stirring at a temperature of 150°C, for 1,5 hours. Thereafter a vacuum of 40 kPa is applied and the temperature is raised to 250°C for a period of 3 hours. During this latter time period the reaction $H_2O$ is removed and substantial cross linking is promoted in the compound between the various molecules of the phosphoric ester, which has been formed in the first stage of the reaction. The product is discharged from the cooled reactor and ground into a powder the granules of which have a diameter of less than 80 μm.

Example 8

200 g of phosphoric acid ($H_3PO_4$ = 85%) are reacted with 250 g of tris(2-hydroxymethyl)isocyanurate. The reaction is allowed to proceed according to example 7 and a product is extracted which after being cooled and ground in powder-like condition has characteristics substantially equivalent to those of the product of example 7.

Example 9 (Comparative Example)

150 g of phosphoric acid ($H_3PO_4$ = 100%) are reacted with 200 g of tris(2-hydroxyethyl)isocyanurate and with 300 g of N,N'dimethylolethylene urea. The reaction is allowed to proceed as described in example 7, and the respective product obtained is also comparable to those of examples 7 and 8.

Example 10 (Comparative Example)

80 g of phosphoric acid ($H_3PO_4$ = 115%) are reacted with 150 trishydroxyethylisocyanurate, with 150 g of trimethylol derivative of melamine and 50 g of N,N'-dimethylolurea. The reaction is allowed to proceed according to example 7 and a product is obtained having characteristics similar to those of the products of the preceeding examples.

Example 11 (Comparative Example)

Proceeding in the same way and under the same conditions as in example 7, 120 g of phosphoric acid ($H_3PO_4$ = 90%) are reacted with 280 g of N,N'dimethylolethylurea and with 280 g of hexamethylolmelamine. The extracted product after cooling is then ground into a powder formed of granules of diameter less than 70 μm.

Example 12 (Comparative Example)

Proceeding in the same way and under the same conditions as in example 7, 80 g of phosphoric acid ($H_3PO_4$ = 85%) are reacted with 300 g of trimethylolderivative of melamine.

A product having characteristics comparable to those of example 8 is obtained.

The powders obtained from proceeding examples 7 to 12 are mixed with polypropylene as the thermoplastic polymer and with ammonium polyphosphate, and, in the described modified embodiment in mixture with an amine phosphate, in a Banbury type mixer at the temperature which is most suitable for obtaining a granular product.

The results are indicated as examples in the following table II, in which polypropylene is used as polymer, but comparable results are obtained with other thermoplastic polymers.

TABLE II

| | Parts by weight | | | | | |
|---|---|---|---|---|---|---|
| Component A of example 7 | 15 | | | | | |
| Polyphosphate $NH_4$ | 15 | | | | | |
| Component A of example 8 | | 10 | | | | |
| Polyphosphate $NH_4$ | | 15 | | | | |
| Orthophosphate of melamine | | 15 | | | | |
| Component A of example 9 | | | 15 | | | |
| Polyphosphate $NH_4$ | | | 10 | | | |
| Pyrophosphate of melamine | | | 10 | | | |
| Component A of example 10 | | | | 20 | | |
| Polyphosphate $NH_4$ | | | | 10 | | |
| Component A of example 11 | | | | | 18 | |
| Polyphosphate $NH_4$ | | | | | 12 | |
| Component A of example 12 | | | | | | 20 |
| Polyphosphate $NH_4$ | | | | | | 15 |
| Polypropylene Melt index 10 | 70 | 70 | 65 | 70 | 70 | 65 |
| Oxygen index | 33,5 | 32 | 30 | 28,5 | 29 | 29,5 |
| UL 94 (3,2 mm) test | V-0 | V-0 | V-0 | V-0 | V-0 | V-0 |

## Claims

1. Flame-retardant polymeric compositions which upon contact with a flame provide an intumescent charforming crust, are non-dripping and promote neither flames nor toxic fumes, containing per 100 parts by weight of a thermoplastic polymer, at least 5 parts by weight of a reaction product (component A) between an acid of phosphorus and a hydroxyalkylated urea derivative said reaction product having chemical structure units of the type

$$-\!\!\left[N-\!\left(CH_2\right)_n-O-P\right]\!\!-$$

wherein n has a value between, and including, 1 and 6, characterized in that as hydroxy-alkylated urea derivative a hydroxyalkyl derivative of isocyanuric acid having the formula

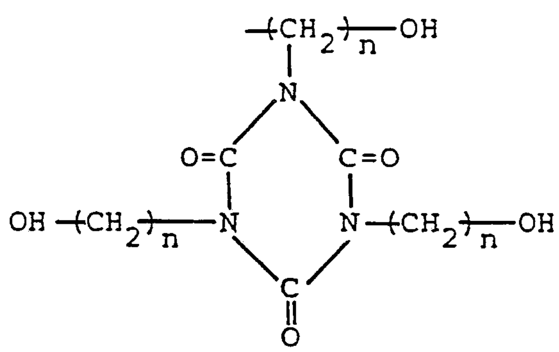

wherein n has a value between, and including, 1 and 6 is used and that they contain component A in an amount of from 5 to 40 parts by weight.

2. Flame-retardant polymeric compositions, according to claim 1, characterized in that they contain per 100 parts by weight of a thermoplastic polymer, additional to component A, from 5 to 30 parts by weight of an ammonium polyphosphate (component B) as well as optionally an amine phosphate in an amount of 1 to 10 parts by weight per 100 parts by weight of thermoplastic polymer.

3. Flame-retardant polymeric compositions according to claim 2, characterized in that the hydroxyalkyl derivative of the isocyanuric acid is tris(2-hydroxyethyl)-isocyanurate.

4. Flame-retardant polymeric compositions according to any of the preceding claims, characterized in that the acid of phosphorus is phosphorous acid or phosphoric acid.

5. Flame-retardant polymeric compositions according to any of the preceding claims, characterized in that the molar ratio between the acid of phosphorus and the hydroxyalkyl derivative of isocyanuric acid is comprised between 4:1 and 0,1:4.

6. Flame-retardant polymeric compositions according to any of the preceding claims 2 through 5, characterized in that said ammonium polyphosphate has the formula $(NH_4PO_3)_{n'}$, wherein n' is greater than 20.

7. Flame-retardant polymeric compositions according to any of claims 2 to 6, characterized in that said amine phosphate is the orthophosphate of melamine or the pyrophosphate of melamine.

8. Flame-retardant polymeric compositions according to any of the preceding claims, characterized in that said thermoplastic polymer is selected from the group consisting of polymers or copolymers of olefine, polyesters, polyvinyl derivatives, polyamides, polycarbonates and mixtures of these polymers with elastomers.

**Patentansprüche**

1. Flammhemmende Polymerzusammensetzungen, die bei Kontakt mit einer Flamme eine Verkohlungs-Intumeszenz-Kruste ergeben, keine Tropfenbildung aufweisen und weder Flammen noch toxische Dämpfe hervorrufen, und die auf 100-Gewichtsteile eines thermoplastischen Polymers wenigstens 5 Gewichtsteile eines Reaktionsprodukts (Komponente A) zwischen einer phosphorhaltigen Säure und einem hydroxyalkyl-substituierten Harnstoffabkömmlung enthalten, wobei das genannte Reaktionsprodukt chemische Struktureinheiten des Typs

$$-[N-(CH_2)_n-O-P]-$$

aufweist, worin n einen Wert zwischen und einschließlich 1 und 6 besitzt, dadurch gekennzeichnet, daß als hydroxyalkyl-substituierter Harnstoffabkömmling ein Hydroxyalkyl-Abkömmling von Isocyanursäure mit der Formel

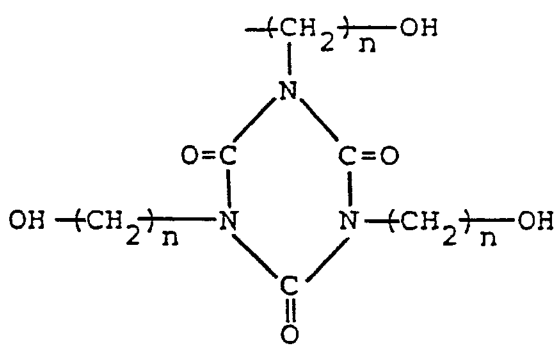

wobei n einen Wert zwischen und einschließlich 1 und 6 besitzt, verwendet wird und daß sie die Komponente A in einem Mengenanteil von 5 bis 40 Gewichtsteilen enthalten.

2. Flammhemmende Polymerzusammensetzungen nach Anspruch 1, dadurch gekennzeichnet, daß sie auf 100 Gewichtsteile eines thermoplastischen Polymers zusätzlich zu der Komponente A 5 bis 30 Gewichtsteile eines Ammoniumpolyphosphats (Komponente B) sowie gegebenenfalls ein Aminphosphat in einem Mengenanteil von 1 bis 10 Gewichtsteilen pro 100 Gewichtsteilen thermoplastisches Polymer enthalten.

3. Flammhemmende Polymerzusammensetzungen nach Anspruch 2, dadurch gekennzeichnet, daß der Hydroxyalkylabkömmling der Isocyanursäure Tris-(2-Hydroxyäthyl)-Isocyanurat ist.

4. Flammhemmende Polymerzusammensetzungen nach einem der vorhergehenden Ansprüche, dadurch gekennzeichnet, daß die phosphorhaltige Säure phosphorige Säure ("phosphorous acid") oder Phosphorsäure ("phosphonic acid") ist.

5. Flammhemmende Polymerzusammensetzungen nach einem der vorhergehenden Ansprüche, dadurch gekennzeichnet, daß das Molverhältnis zwischen der phosphorhaltigen Säure und dem Hydroxyalkyl-Derivat der Isocyanursäure zwischen 4:1 und 0,1:4 liegt.

6. Flammhemmende Polymerzusammensetzungen nach einem der vorhergehenden Ansprüche 2 bis

5, dadurch gekennzeichnet, daß das genannte Ammoniumpolyphosphat die Formel $(NH_4PO_3)_{n'}$ besitzt, wobei n' größer als 20 ist.

7. Flammhemmende Polymerzusammensetzungen nach einem der Ansprüche 2 bis 6, dadurch gekennzeichnet, daß das genannte Aminphosphat das Orthophosphat von Melamin oder das Pyrophosphat von Melamin ist.

8. Flammhemmende Polymerzusammensetzungen nach einem der vorhergehenden Ansprüche, dadurch gekennzeichnet, daß das genannte thermoplastische Polymer aus der Gruppe gewählt wird, welche aus Polymeren oder Copolymeren von Olefinen, Polyestern, Polyvinylderivaten, Polyamiden, Polycarbonaten sowie Gemischen dieser Polymere mit Elastomeren, besteht.

**Revendications**

1. Compositions polymères à effet retardateur de flamme qui, au contact d'une flamme, forment une croûte intumescente carbonisable, ne gouttent pas et ne produisent ni flammes ni fumées toxiques, contenant pour 100 parties en poids d'un polymère thermoplastique, au moins 5 parties en poids d'un produit de réaction (composant A) entre un dérivé acide du phosphore et un dérivé hydroxyalkylé d'urée, ledit produit de réaction présentant des maillons dont la structure chimique est du type:

$$-[N-(CH_2)_n-O-P]-$$

dans lesquels n est une valeur comprise entre 1 et 6, bornes incluses, caractérisées en ce qu'on utilise, comme dérivé hydroxyalkylé d'urée, un dérivé hydroxyalkylé d'acide isocyanurique présentant la formule:

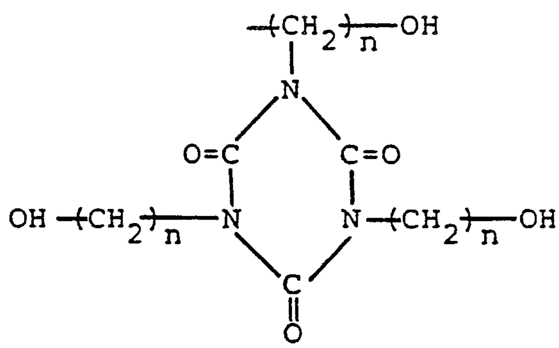

dans laquelle n est une valeur comprise entre 1 et 6, bornes incluses, et en ce qu'elles renferment le composant A en une quantité comprise entre 5 et 40 parties en poids.

2. Compositions polymères à effet retardateur de flamme selon la revendication 1, caractérisées en ce qu'elles contiennent pour 100 parties en poids d'un polymère thermoplastique, en plus du composant A, 5 à 30 parties en poids d'un polyphosphate d'ammonium (composant B), de même que facultativement un phosphate d'amine en une quantité comprise entre 1 et 10 parties en poids pour 100 parties en poids de polymère thermoplastique.

3. Compositions polymères à effet retardateur de flamme selon la revendication 2, caractérisées en ce que le dérivé hydroxyalkylé d'acide isocyanurique est le tris(2-hydroxyéthyl)-isocyanurate.

4. Compositions polymères à effet retardateur de flamme selon l'une quelconque des revendications précédentes, caractérisées en ce que le dérive acide du phosphore est l'acide phosphoreux ou l'acide phosphorique.

5. Compositions polymères à effet retardateur de flamme selon l'une quelconque des revendications 1, 2, 3, 4, caractérisées en ce que le rapport molaire entre le dérivé acide du phosphore et le dérivé hydroxyalkylé d'acide isocyanurique est compris entre 4:1 et 0,1:4.

6. Compositions polymères à effet retardateur de flamme selon l'une quelconque des revendications 2, 3, 4, 5, caractérisées en ce que ledit polyphosphate d'ammonium présente la formule $(NH_4PO_3)_{n'}$, dans laquelle n' est plus grande que 20.

7. Compositions polymères à effet retardateur de flamme selon l'une quelconque des revendications 2, 3, 4, 5, 6, caractérisées en ce que ledit phosphate d'amine est l'orthophosphate de mélamine ou le pyrophosphate de mélamine.

8. Compositions polymères à effet retardateur de flamme selon l'une quelconque des revendications 1, 2, 3, 4, 5, 6, 7, caractérisées en ce que ledit polymère thermoplastique est choisi dans un ensemble composé des polymères ou copolymères d'oléfines, polyesters, dérivés polyvinyliques, polyamides, polycarbonates et mélanges de ces polymères avec des élastomères.